# EUROPÄISCHE PATENTSCHRIFT

(11) **EP 0 662 299 B1**
(45) Veröffentlichungstag und Bekanntmachung des Hinweises auf die Patenterteilung: **02.09.1998**
(21) Anmeldenummer: 94250301.2
(22) Anmeldetag: 23.12.1994
(51) Int. Cl.: A47J 37/06

(54) **Kontaktgrillgerät**
Grill comprising hot plates
Appareil de grill comprenant des plaques chaudes

(30) Priorität: 08.01.1994 DE 9400467 U
(43) Veröffentlichungstag der Anmeldung: 12.07.1995
(73) Patentinhaber: H. H. Scholz KG, D-22143 Hamburg (DE)
(72) Erfinder: Orgelmacher, Friedhelm, D-59494 Soest (DE)
(74) Vertreter: Patentanwälte Wenzel & Kalkoff

(56) Entgegenhaltungen:
- EP-A- 0 307 555
- DD-A- 226 771
- DE-A- 3 620 724
- DE-A- 3 633 394
- DE-A- 3 716 966
- US-A- 4 204 607
- US-A- 5 129 313

## Beschreibung

Die Erfindung betrifft ein elektrisches Kontaktgrillgerät, umfassend mindestens zwei zur Anlage an das Grillgut bestimmte Kontaktplatten, mit einer an einem Mittelarm angeordneten, gegenüber einer festen unteren Kontaktplatte verschwenkbaren oberen Kontaktplatte, die mit mindestens einer Gewichtsentlastungseinrichtung wirkverbunden ist.

Derartige Kontaktgrillgeräte sind aus der Praxis allgemein bekannt. Durch den Einsatz einer Gewichtsentlastungseinrichtung kann bei vollständig geöffneten Kontaktplatten die obere Kontaktplatte in einer weitgehend vertikalen Position gehalten bzw. fixiert werden, also nicht von allein "zufallen", und außerdem können Rückstände wie Fett od.dgl. von der oberen Kontaktplatte auf die untere herablaufen, so daß eine Verschmutzung außerhalb der Platten nicht auftritt. Es erfolgt auch eine Reduzierung der auf dem Grillgut in Form der oberen Kontaktplatte lastenden Masse.

In der DE-A-3 633 394 ist ein Kontaktgrillgerät mit einem über einen Hebel an der oberen Kontaktplatte angelenkten Gegengewicht, das das Öffnen des Geräts erleichtert, beschrieben.

Ein weiteres bekanntes Grillgerät der eingangs genannten Art ist in DE-A-3 620 724 offenbart. Hier sind ebenfalls an der oberen Platte angelenkte Gewichte vorgesehen, die gegen das Gewicht der Platte wirken und damit deren Aufwärtsbewegung fördern. In dieser Einrichtung ist zusätzlich ein Bremszylinder vorgesehen, der lediglich bei gehobener oberer Platte gegen die Kraft des Gegengewichts zum Dämpfen der Aufwärtsbewegung wirkt.

In beiden Fällen unterstützt das als Gewichtsentlastung fungierende Gegengewicht ein leichtes Öffnen der oberen Kontaktplatte bei geringem Kräfteeinsatz. Bei den bekannten Einrichtungen führt allerdings eine Änderung der auf das Grillgut ausgeübten Kraft, z.B. um Gargut unterschiedlicher Höhe mit ausreichendem Kontakt mit den Platten zuzubereiten, zwangsläufig zur gleichen Änderung der Gewichtsentlastung der oberen Kontaktplatte. Damit sind die Gewichtsentlastung bei angehobener oberer Platte und die auf das Grillgut ausgeübte Kraft voneinander abhängig.

Außerdem sind bei bekannten Kontaktgrillgeräten die Kontaktplatten selbst oft als Metall- oder Glasplatten ausgebildet, wobei die Verwendung dieser Werkstoffe einen Kompromiß zwischen zufriedenstellender Wärmeleitung und genügend harter Oberflächenbeschaffenheit zwecks ausreichender Widerstandsfähigkeit bei den oft erforderlichen Reinigungsarbeiten an den Platten darstellt. Zwar ist es allgemein bekannt, daß z.B. Aluminium eine bessere Wärmeleitung bietet als Metallegierungen, jedoch ist eine Reinigung einer lediglich aus Aluminium bestehenden Kontaktplatte eines Kontaktgrillgerätes nicht zufriedenstellend möglich, weil die Haltbarkeit und Lebensdauer einer solchen, eine relativ weiche Oberfläche aufweisenden Kontaktplatte doch stark eingeschränkt wäre. Bekannte Kontaktgrillgeräte sind zudem in ihrer Handhabbarkeit bei der Beschickung, Reinigung etc. oftmals nicht zufriedenstellend ausgebildet.

Der Erfindung liegt demgegenüber die Aufgabe zugrunde, ein hinsichtlich Leistung und Zweckmäßigkeit bei der Handhabung verbessertes Kontaktgrillgerät zur Verfügung zu stellen.

Diese Aufgabe wird bei einem elektrischen Kontaktgrillgerät der eingangs genannten Art dadurch gelöst, daß eine Gewichtsentlastungseinrichtung in einem senkrechten, feststehenden Mittelarmteil angeordnet und zur maximalen gewichtsentlastenden Einwirkung bei gehobener verschwenkbarer Kontaktplatte ausgebildet ist, und daß eine weitere gegen das Gewicht der oberen Platte wirkende Gewichtsentlastungseinrichtung in einem verschwenkbaren Mittelarmteil angeordnet und zu maximaler gewichtsentlastender Einwirkung bei abgesenkter verschwenkbarer Kontaktplatte ausgebildet ist.

Neben der erheblich erleichterten Handhabung erreicht man mit der erfindungsgemäßen Lösung insbesondere durch die Anordnung der verschwenkbaren Kontaktplatte an einem Mittelarm eine maßgebliche Verbesserung der Bedienbarkeit und des Materialaufwands bei ausreichender Stabilität und Robustheit gegenüber herkömmlichen, zwei Seitenarme aufweisenden Kontaktgrillgeräten. Außerdem sind durch die Integration der Gewichsentlastungseinrichtungen in den Mittelarm zusätzlich die Abmaße des Kontaktgrillgerätes erhöhende Baugruppen vermieden.

In einer besonders vorteilhaften Ausführungsform der Erfindung wird mindestens eine Kontaktplatte nach Art einer Sandwichplatte, umfassend einen Aluminium-Kern und eine äußere Edelstahlschicht, ausgebildet. Die Edelstahlschicht ist dabei wenigstens auf der zum Grillgut bzw. -raum gerichteten Seite der Kontaktplatte aufgebracht. Eine solche Kontaktplatte für ein elektrisches Kontaktgrillgerät zeichnet sich neben harter Oberflächenbeschaffenheit und Glatte durch hervorragende warmeverteilung bzw. -leitung aus, wobei zusätzlich eine geringe Wärmeabstrahlung bei geöffnetem Kontaktgrillgerät erreicht wird, da die Wärme durch die Edelstahlschicht in den Aluminium-Kern reflektiert wird. Damit verbessern sich die Arbeitsverhältnisse für die Bedienungsperson des Kontaktgrillgerätes. Durch die Edelstahlschicht verursachen die in der Praxis häufig erforderlichen Reinigungsvorgänge kaum Verschleiß an der Kontaktplatte bzw. deren Oberfläche. Mit diesen Kontaktplatten sind aufgrund der hohen Wärmeleitfähigkeit Gargutzubereitungsleistungen bei relativ geringem Energieeinsatz realisierbar, so daß selbst tiefgefrorenes Grillgut in relativ kurzer Zeit fertiggestellt werden können. Des weiteren ist es möglich, die Kontaktplatten selbst relativ dünn auszuführen, da gegenüber herkömmlichen Kontaktplatten das Verziehen der aufgeheizten Kontaktplatten geringer ist. Dadurch zeichnet sich diese Kontaktplatte durch eine kurze Aufheizzeit aus, wodurch ein hoher energetischer Wirkungsgrad erreichbar ist.

Besonders fertigungsgünstig ist eine derartige Kontaktplatte herstellbar, wenn die Edelstahlschicht auf den Aluminium-Kern aufgewalzt wird.

Vorteilhafterweise kann die obere Kontaktplatte schwimmend, d.h. beweglich am bzw. im Mittelarm gelagert sein. Eine solche Lagerung ist besonders fertigungsgünstig über ein mit dem Mittelarm wirkverbundenes Kreuzgelenk möglich. Durch die schwimmende Lagerung ist eine äußerst gleichmäßige Druckverteilung auf das nicht immer gleiche Dicken aufweisende Grillgut erreichbar.

Besonders praktisch und einfach sind Gewichtsentlastungseinrichtungen bereitzustellen, wenn diese als jeweils über mindestens eine Druckfeder gewichtsentlastend auf die obere Kontaktplatte einwirkende Komponenten vorgesehen sind. Der Einsatz von Druckfedern ist besonders kostengünstig, wenig störanfällig und sehr robust.

Um eine sehr wirkungsvolle und zudem robuste Gewichtsentlastungseinrichtung bei niedrigem Fertigungsaufwand zu gewährleisten, kann die im feststehenden Mittelarmteil angeordnete Gewichtsentlastungseinrichtung als ein Getriebemechanismus nach Art eines Koppelgetriebes ausgebildet sein.

Eine besonders sicher funktionierende und allen praktischen Anforderungen genügende Gewichtsentlastung läßt sich erreichen, wenn die im festen, unverschwenkbaren Mittelarmteil angeordnete Gewichtsentlastungseinrichtung mindestens einen fest und verschwenkbar mit einer Dreh- bzw. Schwenkachse des Mittelarms verbundenen Hebelarm umfaßt, dessen der Drehachse abgekehrtes Ende mit einem Bolzen wirkverbunden ist, wobei der Bolzen in einem in einem Grundrahmen des Mittelarms gelenkig angeordneten Rahmen gelagert ist, indem zwischen einem Mittelstück des Rahmens und einer an dem dem Hebelarm entgegengesetzten Ende des Bolzens angeordneten Mutter eine Druckfeder angeordnet ist. Vorzugsweise können zwei paarweise zueinander angeordnete Bolzen vorgesehen sein, die über jeweils eine Feder mit jeweils einem Hebelarm wirkverbunden sind.

Vorteilhafterweise kann jeder Hebelarm in sich gekröpft ausgebildet sein, damit eine besonders günstige Krafteinleitung für die Gewichtsentlastung in allen möglichen Lagen der oberen Kontaktplatte gewährleistet wird.

Um eine nichtlineare Gewichtsentlastung zu erreichen, können die durch die gekröpfte Ausbildung des Hebelarmes gebildeten Lastarme unterschiedliche Länge aufweisen. Dabei ist die wirkende Gewichtsentlastung etwas herabgesetzt, wenn die kürzeren Lastarme der Hebelarme bei geschlossener oberer Kontaktplatte als Lastarme für die die Gewichtsentlastung bewirkenden Federn fungieren. Damit kann ein bestimmter Teil der Masse der oberen Kontaktplatten auf dem Gargut aufliegen und auf dieses entsprechend den Erfordernissen des Garprozesses einwirken. Die längeren Lastarme fungieren bei geöffneter oberer Kontaktplatte als Lastarme, wodurch das Öffnen bzw. das Offenhalten erleichtert wird.

Die im verschwenkbaren Mittelarmteil angeordnete Gewichtsentlastungseinrichtung kann als Stange ausgebildet sein, die außerhalb der Drehachse des Mittelarmes in dem Grundrahmen des feststehenden Mittelarmteils gelagert ist, wobei auf der Stange ein mit einem Verstellknopf des Mittelarmes verbundenes Schiebestück gleitfähig und zwischen Schiebestück und einem am freien Ende der Stange angeordnetem Anschlag die Druckfeder gelagert ist. Dabei kann das Schiebestück außerhalb der Mittelpunktachse des Verstellknopfes mit diesem verbunden sein, so daß bei dessen Verstellung eine Verschiebung des Schiebestückes auf der Stange erfolgt. Somit ist eine weitere und zusätzliche, zuverlässig arbeitende Gewichtsentlastungseinrichtung erreichbar, deren wirksame Gewichtsentlastung unabhängig von der im feststehenden Mittelarm angeordneten Gewichtsentlastungseinrichtung einstell- und regulierbar ist, also an die jeweilig sich aus der Praxis ergebenden Anforderungen angepaßt werden kann. So kann Gargut unterschiedlicher Höhe chargenweise bei ausreichendem Kontakt mit den Platten zubereitet werden.

Das Kontaktgrillgerät kann eine den Mindestabstand zwischen den Kontaktplatten bestimmende Anschlagbegrenzung umfassen. Die Anschlagbegrenzung ist verstellbar, d.h. sie ermöglicht eine Höhenverstellung des möglichen minimalen Abstandes zwischen den Kontaktplatten.

Die Anschlagbegrenzung kann im verschwenkbaren Mittelarmteil angeordnet sein. Dazu kann sie als Stange ausgebildet sein, die außerhalb der Drehachse des Mittelarms in dem Grundrahmen des feststehenden Mittelarmteils gelagert ist, wobei auf der Stange ein mit einem weiteren Verstellknopf des Mittelarms verbundenes Schiebestück gleitfähig gelagert und zwischen Schiebestück und einem am freien Ende der Stange angeordnetem Endstück eine in einer Hülse gelagerte Feder angeordnet ist.

Zur Vermeidung einer Bauteilzerstörung bei Druckausübung auf die bis zur wirkenden Anschlagbegrenzung geschlossenen Kontaktplatten kann die Hülse so ausgebildet sein, daß sie über eine in ihr verschiebbare Federhalterung die Längenausdehnung der Feder bestimmt.

Um den Einsatzbereich und die Anpassungsmöglichkeiten an die praktischen Erfordernisse zu erhöhen, kann das erfindungsgemäße Kontaktgrillgerät modular aufgebaut sein.

Um auch den Anforderungen einer besonders schnell ablaufenden Massenfertigung des zuzubereitenden Gargutes zu genügen, kann das Kontaktgrillgerät eine gegenüber der Grundplatte verschiebbare Kontaktoberplatte umfassen; d.h., die wirksame Fläche der unteren Kontaktplatte ist größer als die der oberen Kontaktplatte, wodurch sich der Beschickungsvorgang wirksam verbessern läßt und das erfindungsgemäße Kontaktgrillgerät zusätzlich neben dem Kontaktgrillen für andere Zubereitungsarten wie z.B. Braten verwendet werden kann.

Vorteilhafterweise umfaßt das erfindungsgemäße Kontaktgrillgerät mehrere obere Kontaktplatten, so daß Grillvorgänge in unterschiedlichen Zyklen realisiert werden können.

Besonders einfach können unterschiedliche Temperaturen erfordernde Grillvorgänge verwirklicht werden, indem die einzelnen Kontaktplatten diesbezüglich getrennt steuer- und/oder regelbar sind.

Zur Vereinfachung des Geräteservices sowie der Zugänglichkeit zu wichtigen Baugruppen im Montagefall kann die erforderliche elektrische Schaltung in einer separaten Baueinheit angeordnet sein. So kann die Baueinheit für die elektrische Schaltung auch außerhalb, also räumlich getrennt von den Kontaktplatten angeordnet sein. Kundenspezifische Wünsche sind ohne größeren Aufwand realisierbar.

Zur weiteren Verbesserung der Steuerung der Kontaktplattentemperaturen sowie der Reparatur- und Servicebedingungen kann das erfindungsgemäße Kontaktgrillgerät eine elektronische Regelung umfassen. So können auch bisher üblicherweise eingesetzte mechanische Fühler, deren Lebensdauer begrenzt ist, entfallen.

Zur weiteren Erhöhung der Einsatzmöglichkeit kann mindestens eine obere Kontaktplatte als Strahlungsplatte zum Überbacken bzw. Warmhalten ausgebildet sein.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigen
- Fig. 1: eine axonometrische Darstellung eines erfindungsgemäßen Kontaktgrillgerätes und
- Fig. 2: eine Explosionsdarstellung von Baugruppen für Gewichtsentlastungseinrichtungen, Anschlagbegrenzung sowie Lagerung einer oberen Kontaktplatte.

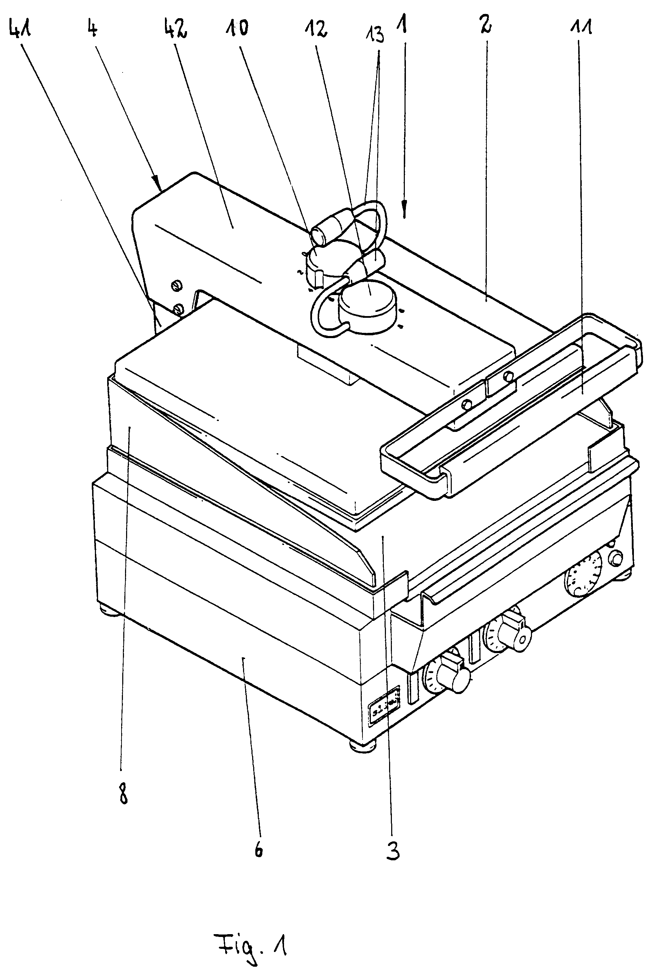

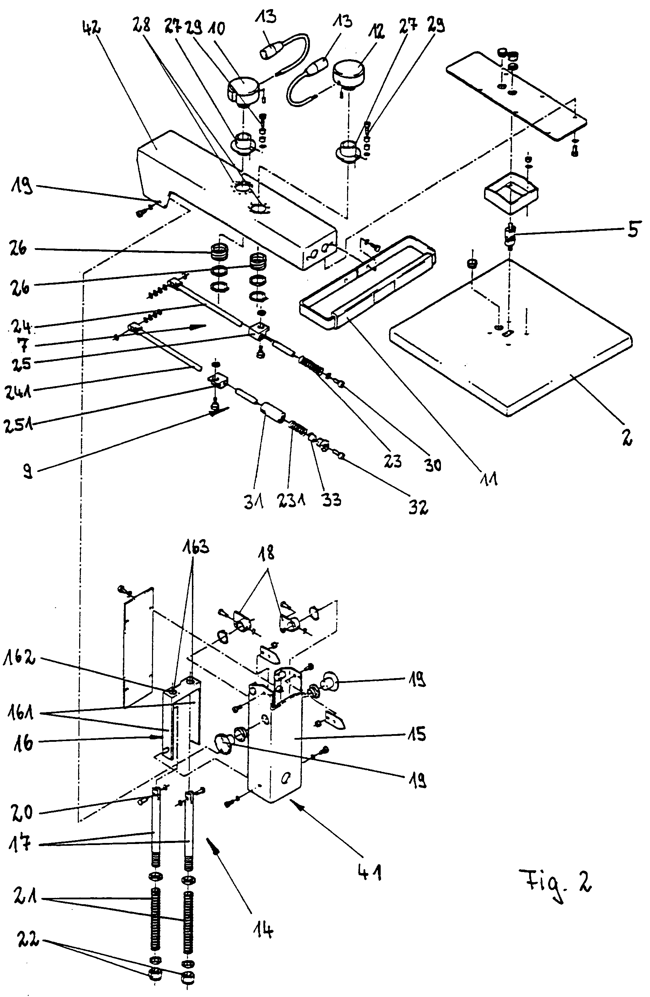

Ein erfindungsgemäßes Kontaktgrillgerät 1 entsprechend Fig. 1 umfaßt eine untere Kontaktplatte 3, an der über einen Mittelarm 4 verschwenkbar eine obere Kontaktplatte 2 angelenkt ist. Die obere Kontaktplatte 2 ist in einem im Mittelarm 4 angeordneten Kreuzgelenk 5 (Fig. 2) schwimmend gelagert. Dadurch erhält die obere Kontaktplatte zwei Freiheitsgrade, die eine nahezu vollständige Anlage an unterschiedlich hohe Grillgutstücke ermöglichen. Die Kontaktplatten 2, 3 sind über einer eine elektrische Schaltung aufnehmenden Baueinheit 6 angeordnet. Zwischen beiden Kontaktplatten 2,3 ist ein Spritzschutz 8 angeordnet. Obere und untere Kontaktplatte 2, 3 sind nach Art einer Sandwichplatte ausgebildet, d.h. sie haben einen Aluminium-Kern, auf dem, zumindest in den eigentlichen Grillbereich weisend, eine Edelstahlschicht aufgewalzt ist.

Der Mittelarm 4 umfaßt einen senkrechten, im Bereich der unteren Kontaktplatte 3 angeordneten Mittelarmteil 41, an dem ein zweiter Mittelarmteil 42 verschwenkbar gelagert ist. Am freien Ende des zweiten Mittelarmteils 42 ist ein Bedienungselement 11 zum Öffnen bzw. Schließen des Kontaktgrillgerätes angeordnet. Weiterhin umfaßt der Mittelarm 4 einen Stellknopf 10 für eine Gewichtsentlastungseinrichtung 7,14 (Fig. 2) sowie einen Stellknopf 12 für eine Anschlagbegrenzung 9 (Fig. 2), die über Stellhebel 13 bedient werden können.

Aus der in Fig. 2 dargestellten Explosionsdarstellung ist besonders die Anordnung und Funktionsweise der Gewichtsentlastungseinrichtungen 7 sowie der Anschlagbegrenzung 9 erkennbar. Das Kontaktgrillgerät 1 umfaßt zwei verschiedene Gewichtsentlastungseinrichtungen 7,14. Die Haupt-Gewichtsentlastungseinrichtung 14 ist im senkrechtstehenden, festen Mittelarmteil 41 angeordnet, während sich die zweite Gewichtsentlastungseinrichtung 7 im verschwenkbaren Mittelarmteil 42 befindet. Der feststehende Mittelarmteil 41 umfaßt einen mit der Grundeinheit oder der Baueinheit 6 des Kontaktgrillgerätes 1 verbundenen Grundrahmen 15. In diesem Grundrahmen 15 ist ein Rahmen 16 gelenkig gelagert, wobei dessen Drehachse sich im unteren Bereich des Grundrahmens 15 befindet. Der Rahmen 16 weist zwei parallel zueinander ausgerichtete Schenkel 161 auf, deren obere Kanten durch ein Mittelstück 162 verbunden sind. In diesem Mittelstück 162 sind zwei Bohrungen 163 eingearbeitet, durch die zwei Bolzen 17 gesteckt werden können. Die nach oben durch das Mittel-stück 162 ragenden Bolzenenden sind gelenkig mit zwei Hebelarmen 18 verbunden, die über eine radiale Schraubverbindung fest mit der Drehachse 19 des schwenkbaren Mittelarmteils 42 verbunden sind. Die Hebelarme 18 sind außerhalb ihrer Drehachse 19, die der des Mittelarmteils 42 entspricht, mit den Bolzen 17 verbunden, wobei sie in Schlitzen 20 der Bolzen 17 gelenkig geführt und verschraubt sind. An den unteren Teilen der Bolzen 17 sind Federn 21 (Druckfedern) über Muttern 22 angeordnet. Die Federn 21 liegen am Mittelstück 162 des Rahmens 16 an und üben dadurch eine nach unten gerichtete Kraft auf die Bolzen 17 aus. Diese Kraft wirkt auf die verschwenkbar im Grundrahmen 15 gelagerten Hebelarme 18, so daß auf die obere Kontaktplatte 2 ständig eine Kraft in Öffnungsrichtung einwirkt. Die Folge ist eine Gewichtsentlastung. Die Kraft dieser Gewichtsentlastung ist von der Vorspannung der Federn 21 abhängig, die über die Muttern 22 einstellbar ist. Die Anlenkung des Mittelarmteils 42 an der Drehachse 19 erfolgt exzentrisch, so daß bei der Verschwenkbewegung des Mittelarmteils 42 der Rahmen 16 ebenfalls leicht verschwenkt wird. In geöffnetem Zustand des Kontaktgrillgerätes 1 halten die Federn 21 die obere Kontaktplatte 2 offen. Es ist hervorzuheben, daß die Hebelarme 18 in sich gekröpft ausgebildet sind. So umfaßt jeder Hebelarm 18 zwei Lastarme, die unterschiedliche Länge aufweisen. Daher wirkt der kürzere Lastarm als Lastarm für die Feder 21, wenn das Kontaktgrillgerät geschlossen ist. Der längere Lastarm hingegen wirkt als Lastarm bei geöffnetem Kontaktgrillgerät. Dadurch wird der Bedienungsvorgang beim Öffnen erleichtert.

Die zweite Gewichtsentlastungseinrichtung 7 befindet sich, wie bereits ausgeführt, im verschwenkbaren Mittelarmteil 42. Dazu ist eine Stange 24 außerhalb der Drehachse 19 des verschwenkbaren Mittelarmteils 42 in dem Grundrahmen 15 des feststehenden Mittelarmteiles 41 gelagert. Auf der Stange 24 ist ein Schiebestück 25 angeordnet, das über eine Druckfeder 26 mittels einer Schraubverbindung mit dem Stellknopf 10 verbunden ist. Zwischen Stellknopf 10 und Mittelarmteil 42 ist eine Lagerbuchse 27 angeordnet. Um die Aufnahmebohrung für den Stellknopf 12 herum befindet sich ein Lochkreis 28, in dessen einzelne Bohrungen ein Stift 29 des Stellknopfes 10 einrasten kann. Durch Zug auf den Stellknopf 10 wird der Stift 29 aus der jeweiligen Bohrung des Lochkreises 28 gezogen und durch eine Drehbewegung in eine andere Bohrung eingerastet. Dabei verschiebt sich das Schiebestück 25 auf der Stange 24. Auf dem seiner Lagerung entgegenliegenden Ende der Stange 25 ist eine Feder 23 angeordnet und über einen Anschlag 30 gehalten. Bei geöffnetem Kontaktgrillgerät 1 ist der Abstand zwischen Schiebestück 25 und Anschlag 30 aufgrund der unterschiedlichen Verschwenkachsen auf der Stange 24 am größten. Wird der Mittelarmteil 42 nach unten geschwenkt, so verringert sich der Abstand zwischen Schiebestück 25 und Anschlag 30, bis das Schiebestück 25, je nach Voreinstellung durch den Stellknopf 10, an der Feder 23 zur Anlage kommt, so daß eine Druckkraft aufgebaut wird, die einem weiteren Senken des Mittelarmteils 42 und damit der oberen Kontaktplatte 2 entgegengerichtet ist.

Zusätzlich zu dieser Gewichtsentlastungseinrichtung 7 befindet sich im verschwenkbaren Mittelarmteil 42 eine Anschlagbegrenzung 9. Diese weist einen ähnlichen Aufbau wie die neben ihr angeordnete Gewichtsentlastungseinrichtung 7 auf. Der Anschlag wird über eine Feder 231 realisiert, die zusammendrückbar in einer Hülse 31 gelagert ist. Der Anschlag ist dann gegeben, wenn die Hülse 31 an einem Schiebestück 251 der Anschlagbegrenzung 9 anstößt und ein am Ende dieser Stange 241 angeordnetes Endstück 32 an die in der Hülse 31 gelagerte Feder 231 an einer Federhalterung 33 zur Anlage kommt bzw. diese geringfügig zusammendrückt. Der jeweils gewünschte Anschlag läßt sich ebenfalls über einen Stellknopf 12 festlegen, der auf das Schiebestück 251 der Stange 241 einwirkt und dieses auf der Stange 241 verschieben kann. Die Hülse 31 bestimmt lediglich die größtmögliche Längenausdehnung der in ihr gelagerten Feder 231. Durch die Ausbildung dieser Anschlagbegrenzung 9 als Federpaket ist auch nach der eigentlichen Anschlagbegrenzung durch Anlage des Endstückes 32 an der Federhalterung 33 der Feder 231 ein weiteres unbeabsichtigtes Herunterdrücken der oberen Kontaktplatte 2 in Richtung zur unteren Kontaktplatte 3 möglich, ohne daß die Bauteile für die Anschlagbegrenzung 9 zerstört werden.

Die obere Kontaktplatte 2 selbst ist über ein Kreuzgelenk 5 mit dem verschwenkbaren Bereich des Mittelarmes 42 wirkverbunden, so daß die Platte 2 sozusagen schwimmend um das Kreuzgelenk 5 gelagert ist.

## Patentansprüche

1. Elektrisches Kontaktgrillgerät, umfassend mindestens zwei zur Anlage an das Grillgut bestimmte Kontaktplatten (2, 3), mit einer an einem Mittelarm (4) angeordneten, gegenüber einer festen unteren Kontaktplatte (3) verschwenkbaren oberen Kontaktplatte (2), die mit mindestens einer Gewichtsentlastungseinrichtung (7, 14) wirkverbunden ist, **dadurch gekennzeichnet,** daß eine Gewichtsentlastungseinrichtung (14) in einem senkrechten, feststehenden Mittelarmteil (41) angeordnet und zur maximalen gewichtsentlastenden Einwirkung bei gehobener verschwenkbarer Kontaktplatte (2) ausgebildet ist, und daß eine weitere gegen das Gewicht der oberen Platte (2) wirkende Gewichtsentlastungseinrichtung (7) in einem verschwenkbaren Mittelarmteil (42) angeordnet und zu maximaler gewichtsentlastender Einwirkung bei abgesenkter verschwenkbarer Kontaktplatte (2) ausgebildet ist.

2. Kontaktgrillgerät nach Anspruch 1, **dadurch gekennzeichnet,** daß mindestens eine Kontaktplatte (2, 3) nach Art einer Sandwichplatte umfassend einen Aluminiumkern und eine äußere, zum Grillraum gerichtete Edelstahlschicht, ausgebildet ist.

3. Kontaktgrillgerät nach Anspruch 2, **dadurch gekennzeichnet,** daß die Edelstahlschicht aufgewalzt ist.

4. Kontaktgrillgerät nach Anspruch 1, **dadurch gekennzeichnet**, daß die obere Kontaktplatte (2) schwimmend am oder im Mittelarm (4) gelagert ist.

5. Kontaktgrillgerät nach Anspruch 1 oder 4, **dadurch gekennzeichnet,** daß die obere Kontaktplatte (2) über ein Kreuzgelenk (5) mit dem Mittelarm (4) verbunden ist.

6. Kontaktgrillgerät nach einem der Ansprüche 1 bis 5, **dadurch gekennzeichnet,** daß die Gewichtsentlastungseinrichtungen (7, 14) einstellbar sind.

7. Kontaktgrillgerät nach einem der Ansprüche 1 bis 6, **dadurch gekennzeichnet,** daß die Gewichtsentlastungseinrichtungen (7, 14) als jeweils über mindestens eine Feder (21, 23) gewichtsentlastend auf die obere Kontaktplatte (2) einwirkende Komponenten ausgebildet sind.

8. Kontaktgrillgerät nach einem der Ansprüche 1 bis 7, **dadurch gekennzeichnet,** daß die im feststehenden Mittelarmteil (41) angeordnete Gewichtsentlastungseinrichtung (14) als ein Getriebemechanismus nach Art eines Koppelgetriebes ausgebildet ist.

9. Kontaktgrillgerät nach einem der Ansprüche 1 bis 8, **dadurch gekennzeichnet,** daß die im feststehenden Mittelarmteil (41) angeordnete Gewichtsentlastungseinrichtung (14) mindestens einen fest und verschwenkbar mit einer Drehachse (19) des Mittelarmteils (41) verbundenen Hebelarm (18) umfaßt, dessen der Drehachse (19) abgekehrtes Ende mit einem Bolzen (17) wirkverbunden ist, wobei der Bolzen (17) in einem in einem Grundrahmen (15) des Mittelarmteils (41) gelenkig angeordneten Rahmen (16) gelagert ist, indem zwischen einem Mittelstück (162) des Rahmens (16) und einer an dem dem Hebelarm (18) entgegengesetzten Ende des Bolzens (17) angeordneten Mutter (22) eine Feder (21) gespannt ist.

10. Kontaktgrillgerät nach Anspruch 9, **dadurch gekennzeichnet,** daß zwei Bolzen (17) vorgesehen sind, die über jeweils eine Feder (21) mit jeweils einem Hebelarm (18) wirkverbunden sind.

11. Kontaktgrillgerät nach Anspruch 9 oder 10**, dadurch gekennzeichnet**, daß jeder Hebelarm (8) gekröpft ausgebildet ist.

12. Kontaktgrillgerät nach Anspruch 11, **dadurch gekennzeichnet,** daß die durch die gekröpfte Ausbildung eines Hebelarmes (18) gebildeten Lastarme unterschiedliche Länge aufweisen.

13. Kontaktgrillgerät nach Anspruch 12, **dadurch gekennzeichnet,** daß die kürzeren Lastarme bei geschlossener oberer Kontaktplatte (2) und die längeren Lastarme bei geöffneter oberer Kontaktplatte (2) als Lastarme für die die Gewichtsentlastung bewirkenden Federn (21) fungieren.

14. Kontaktgrillgerät nach einem der Ansprüche 1 bis 13, **dadurch gekennzeichnet,** daß die im Mittelarmteil (42) angeordnete Gewichtsenlastungseinrichtung (7) als Stange (24) ausgebildet ist, die außerhalb der Drehachse (19) des Mittelarmteils (42) in dem Grundrahmen (15) gelagert ist, wobei auf der Stange (24) ein mit einem Verstellknopf (10) des Mittelarmteils (42) verbundenes Schiebestück (25) gleitbar und zwischen Schiebestück (25) und einem am freien Ende der Stange (24) angeordneten Anschlag (30) die Feder (23) gelagert ist.

15. Kontaktgrillgerät nach Anspruch 14, **dadurch gekennzeichnet,** daß das Schiebestück (25) außerhalb der Mittelpunktachse des Verstellknopfes (10) mit diesem verbunden ist, so daß bei dessen Verstellung das Schiebestück (25) auf der Stange (24) verschiebbar ist.

16. Kontaktgrillgerät nach einem der Ansprüche 15, **dadurch gekennzeichnet,** daß es eine den Mindestabstand zwischen den Kontaktplatten (2, 3) bestimmende Anschlagbegrenzung (9) umfaßt.

17. Kontaktgrillgerät nach Anspruch 16, **dadurch gekennzeichnet**, daß die Anschlagbegrenzung (9) verstellbar und im verschwenkbaren Mittelarmteil (42) angeordnet ist.

18. Kontaktgrillgerat nach Anspruch 16 oder 17, **dadurch gekennzeichnet,** daß die Anschlagbegrenzung (9) als Stange (241) ausgebildet ist, die außerhalb der Drehachse (19) des Mittelarmteils (42) in dem Grundrahmen (15) gelagert ist, wobei auf der Stange (241) ein mit einem Verstellknopf (12) des Mittelarmteils (42) verbundenes Schiebestück (251) gleitbar gelagert und zwischen Schiebestück (251) und einem am freien Ende der Stange (241) angeordneten Endstück (32) eine in einer Hülse (31) gelagerte Feder (231) angeordnet ist.

19. Kontaktgrillgerät nach Anspruch 18, **dadurch gekennzeichnet,** daß die Hülse (31) über eine in ihr verschiebbar gelagerte Federhalterung (33) die Längenausdehnung der Feder (231) bestimmt.

20. Kontaktgrillgerät nach einem der Ansprüche 1 bis 19, **dadurch gekennzeichnet,** daß es modular aufbaubar ist.

21. Kontaktgrillgerät nach einem der Ansprüche 1 bis 20, **dadurch gekennzeichnet**, daß es eine gegenüber der unteren Kontaktplatte (3) verschiebbare obere Kontaktplatte (2) umfaßt.

22. Kontaktgrillgerät nach einem der Ansprüche 1 bis 20, **dadurch gekennzeichnet**, daß es mehrere obere Kontaktplatten (2) umfaßt.

23. Kontaktgrillgerät nach einem der Ansprüche 1 bis 22, **dadurch gekennzeichnet,** daß der Heizzustand der einzelnen Kontaktplatten (2, 3) getrennt steuer- und/oder regelbar ist.

24. Kontaktgrillgerät nach einem der Ansprüche 1 bis 23, **dadurch gekennzeichnet,** daß die elektrische Schaltung für Zustandsänderungen des Gerätes in einer separaten Baueinheit (6) angeordnet ist.

25. Kontaktgrillgerät nach Anspruch 24, **dadurch gekennzeichnet,** daß die Baueinheit (6) für die elektrische Schaltung räumlich getrennt von den Kontaktplatten (2, 3) angeordnet ist.

26. Kontaktgrillgerät nach einem der Ansprüche 1 bis 25, **dadurch gekennzeichnet,** daß die Kontaktplattentemperatur elektronisch regelbar ist.

27. Kontaktgrillgerät nach einem der Ansprüche 1 bis 26, **dadurch gekennzeichnet,** daß mindestens eine obere Kontaktplatte (3) als Strahlungsplatte zum Überbacken bzw. Warmhalten ausgebildet ist.

## Claims

1. Electrical contact grill apparatus comprising at least two contact plates (2, 3) for applying to goods to be grilled with an upper contact plate (2) that is pivotal with respect to a stationary lower contact plate (3) and arranged on a central arm (4) and operatively connected to at least one load relieving device (7, 14), characterised in that one load relieving device (14) is arranged in a vertical stationary central arm portion (41) and formed for maximum load relieving operation with the pivotal contact plate (2) raised and that a further load relieving device (7) acting against the weight of the upper plate (2) is arranged in a pivotal central arm portion (42) and formed for maximum load relieving operation with the pivotal contact plate (2) lowered.

2. Contact grill apparatus according to claim 1, characterised in that at least one contact plate (2, 3) is formed in the manner of a sandwich plate comprising an aluminium core and an outer high-grade steel layer, directed towards the grill area.

3. Contact grill apparatus according to claim 2, characterised in that the high-grade steel layer is roller plated.

4. Contact grill apparatus according to claim 1, characterised in that the upper contact plate (2) is floatingly mounted on or in the central arm (4).

5. Contact grill apparatus according to claim 1 or 4, characterised in that the upper contact plate (2) is connected with the central arm (4) by means of a universal joint (5).

6. Contact grill apparatus according to one of claims 1 to 5, characterised in that the load relieving devices (7, 14) are adjustable.

7. Contact grill apparatus according to one of claims 1 to 6, characterised in that the load relieving devices (7, 14) are each formed as components that act to relieve the load of the upper contact plate (2) by means of at least one spring (21, 23).

8. Contact grill apparatus according to one of claims 1 to 7, characterised in that the load relieving device (14) arranged in the stationary central arm portion (41) is formed as a transmission mechanism in the form of a coupler mechanism.

9. Contact grill apparatus according to one of claims 1 to 8, characterised in that the load relieving device (14) arranged in the stationary central arm portion (41) comprises at least one lever arm (18) that is connected firmly to a rotary axle (19) of the central arm portion (41) such that it rotates with the rotary axle, the end of the lever arm directed away from the rotary axle (19) being operationally connected with a bolt (17) that is mounted in a frame (16) hingedly arranged in a base frame (15) of the central arm portion (41), in that a spring (21) is tensioned between a middle piece (162) of the frame (16) and a nut (22) arranged on the end of the bolt (17) directed away from the lever arm (18).

10. Contact grill apparatus according to claim 9, characterised in that there are provided two bolts (17) that are each operationally connected with a lever arm (18) by means of a spring (21).

11. Contact grill apparatus according to claim 9 or 10, characterised in that each lever arm (8) is cranked.

12. Contact grill apparatus according to claim 11, characterised in that the work arms formed by the cranked form of a lever arm (18) have different lengths.

13. Contact grill apparatus according to claim 12, characterised in that the shorter work arm functions as a work arm for the springs (21) effecting the load relief when the upper contact plate (2) is closed and the longer work arm functions as a work arm for the springs (21) effecting the load relief when the upper contact plate (2) is open.

14. Contact grill apparatus according to one of claims 1 to 13, characterised in that the load relieving device (7) arranged in the central arm portion (42) is formed as a rod (24) that is mounted in the base frame (15) outside the pivot axis (19) of the central arm portion (42), a sliding element (25) that is connected with an adjustment knob (10) of the central arm portion (42) being slidably mounted on the rod (24) and the spring (23) being mounted between the sliding element (25) and a stop element (30) disposed at the free end of the rod (24).

15. Contact grill apparatus according to claim 14, characterised in that the sliding element (25) is connected to the adjustment knob (10) outside the the centre point axis of the latter so that on adjustement of the latter the sliding element (25) is slidable on the rod (24).

16. Contact grill apparatus according to one of claims 1 to 15, characterised in that it comprises a stop limiter (9) defining the minimum distance between the contact plates (2, 3).

17. Contact grill apparatus according to claim 16, characterised in that the stop limiter (9) is adjustable and arranged in the pivotal central arm portion (42).

18. Contact grill apparatus according to claim 16 or 17, characterised in that the stop limiter (9) is formed as a rod (241) that is mounted in the base frame (15) outside the rotary axis (19) of the central arm portion (42), a sliding element (251) that is connected with an adjustment knob (12) of the central arm portion (42) being slidably mounted on the rod (241) and a spring (231) mounted in a sleeve (31) being arranged between the sliding element (251) and an end piece (32) arranged at the free end of the rod (241).

19. Contact grill apparatus according to claim 18, characterised in that the sleeve (31) defines the length extension of the spring (231) by means of a spring fixing (33) slidably mounted in the sleeve.

20. Contact grill apparatus according to one of claims 1 to 19, characterised in that it can be assembled in a modular fashion.

21. Contact grill apparatus according to one of claims 1 to 20, characterised in that it comprises an upper contact plate (2) that is slidable with respect to the lower contat plate (3).

22. Contact grill apparatus according to one of claims 1 to 20, characterised in that it comprises several upper contact plates (2).

23. Contact grill apparatus according to one of claims 1 to 22, characterised in that the temperature state of the individual contact plates (2, 3) can be separately controlled.

24. Contact grill apparatus according to one of claims 1 to 23, characterised in that the electrical circuitry for modifying the condition of the apparatus is arranged in a separate module (6).

25. Contact grill apparatus according to claim 24, characterised in that the module (6) for the electrical circuitry is arranged distanced from the contact plates (2, 3).

26. Contact grill apparatus according to one of claims 1 to 25, characterised in that the contact plate temperature can be controlled electronically.

27. Contact grill apparatus according to one of claims 1 to 26, characterised in that at least one upper contact plate (3) is formed as a radiation plate for top-grilling or keeping warm.

## Revendications

1. Gril électrique par contact, comportant au moins deux plaques de contact (2, 3), destinées à être appuyées contre le produit à griller, avec une plaque de contact supérieure (2), disposée contre un bras central (4), pouvant pivoter par rapport à une plaque de contact inférieure et fixe (3), la plaque de contact (2) étant reliée en liaison active avec au moins un dispositif compensateur de poids (7, 14), caractérisé en ce qu'un dispositif compensateur de poids (14) est disposé dans une partie (41), fixe et verticale, du bras central, et est configuré de façon à assurer l'effet maximal de compensation de poids quand la plaque de contact pivotante (2) est relevée, et en ce qu'un autre dispositif compensateur de poids (7), agissant contre le poids de la plaque supérieure (2), est disposé dans une partie pivotante (42) du bras central et est configuré pour assurer un effet maximal de compensation de poids quand la plaque de contact pivotante (2) est abaissée.

2. Gril par contact selon la revendication 1, caractérisé en ce qu'au moins une plaque de contact (2, 3) est configurée à la manière d'une plaque sandwich, comportant un coeur en aluminium et une couche extérieure en acier inoxydable dirigée vers l'espace de grillage.

3. Gril par contact selon la revendication 2, caractérisé en ce que la couche d'acier inoxydable est appliquée par laminage.

4. Gril par contact selon la revendication 1, caractérisé en ce que la plaque de contact supérieure (2) est logée d'une manière flottante contre ou dans le bras central (4).

5. Gril par contact selon la revendication 1 ou 4, caractérisé en ce que la plaque de contact supérieure (2) est reliée au bras central (4) par l'intermédiaire d'un joint de cardan (5).

6. Gril par contact selon l'une des revendications 1 à 5, caractérisé en ce que les dispositifs compensateurs de poids (7, 14) sont orientables.

7. Gril par contact selon l'une des revendications 1 à 6, caractérisé en ce que les dispositifs compensateurs de poids (7, 14) sont configurés sous forme de composants dont chacun agit, par l'intermédiaire d'au moins un ressort (21, 23), avec un effet compensateur de poids sur la plaque de contact supérieure (2).

8. Gril par contact selon l'une des revendications 1 à 7, caractérisé en ce que le dispositif compensateur de poids (14) disposé dans la partie fixe (41) du bras central est configurée comme un mécanisme à engrenage à la manière d'un engrenage couplé.

9. Gril par contact selon l'une des revendications 1 à 8, caractérisé en ce que le dispositif compensateur de poids (14) disposé dans la partie fixe (41) du bras central comporte au moins un bras de levier (18), relié à demeure et d'une manière pivotante à un axe de rotation (19) de la partie (41) du bras central, bras de levier dont l'extrémité opposée à l'axe de rotation (19) est reliée par liaison active à un boulon (17), le boulon (17) étant logé dans un cadre (16), monté en articulation dans un cadre de base (15) de la partie (41) du bras central, un ressort (21) étant tendu entre une pièce centrale (162) du cadre (16) et un écrou (22), disposé à l'extrémité du boulon (17) opposée au bras de levier (18).

10. Gril par contact selon la revendication 9, caractérisé en ce que deux boulons (17) sont prévus, par l'intermédiaire de chacun desquels un ressort (21) est relié par liaison active à un bras de levier (18).

11. Gril par contact selon la revendication 9 ou 10, caractérisé en ce que chaque bras de levier (8) a une configuration coudée.

12. Gril par contact selon la revendication 11, caractérisé en ce que les bras de puissance formés par la configuration coudée d'un bras de levier (18) ont des longueurs différentes.

13. Gril par contact selon la revendication 12, caractérisé en ce que les bras de puissance courts, quand la plaque de contact supérieure (2) est fermée, et les bras de puissance longs, quand la plaque de contact supérieure (2) est ouverte, jouent le rôle de bras de puissance pour les ressorts (21) réalisant la compensation de poids.

14. Gril par contact selon l'une des revendications 1 à 13, caractérisé en ce que le dispositif compensateur de poids (7) disposé dans la partie (42) du bras central est configuré comme une tige (24), qui est logée dans le cadre de base (15) à l'extérieur de l'axe de rotation (19) de la partie (42) du bras central, une pièce coulissante (25), reliée à un bouton de réglage (10) de la partie (42) du bras central, étant logée en glissement sur la tige (24), le ressort (23) étant logé entre la pièce coulissante (25) et une butée (30) rapportée à l'extrémité de la tige (24).

15. Gril par contact selon la revendication 14, caractérisé en ce que la pièce coulissante (25) est, à l'extérieur de l'axe central du bouton de réglage (10), reliée à ce dernier, de façon que, lors de son réglage, la pièce coulissante (25) coulisse sur la tige (24).

16. Gril par contact selon l'une des revendications 1 à 15, caractérisé en ce qu'il comprend une délimitation par butée (9), qui définit la distance minimale entre les plaques de contact (2, 3).

17. Gril par contact selon la revendication 16, caractérisé en ce que la délimitation par butée (9) est réglable et est disposée dans la partie pivotante (42 du bras central.

18. Gril par contact selon la revendication 16 ou 17, caractérisé en ce que la délimitation par butée (9) est configurée comme une tige (241), qui à l'extérieur de l'axe de rotation (19) de la partie (42) du bras central est logée dans le cadre de base (15), une pièce coulissante (251), reliée à un bouton de réglage (12) de la partie (42) du bras central, étant logée en glissement sur la tige (241), et un ressort (231), logé dans une douille (31), étant disposé entre la pièce coulissante (251) et une pièce en bout (32) rapportée à l'extrémité libre de la tige (241).

19. Gril par contact selon la revendication 18, caractérisé en ce que la douille (31) détermine, par l'intermédiaire d'une attache de ressort (33) logée en coulissement dans cette douille, l'extension longitudinale du ressort (231).

20. Gril par contact selon l'une des revendications 1 à 19, caractérisé en ce qu'il peut avoir une construction modulaire.

21. Gril par contact selon l'une des revendications 1 à 20, caractérisé en ce qu'il comporte une plaque de contact supérieure (2) pouvant coulisser par rapport à la plaque de contact inférieure (3).

22. Gril par contact selon l'une des revendications 1 à 20, caractérisé en ce qu'il comporte plusieurs plaques de contact supérieures (2).

23. Gril par contact selon l'une des revendications 1 à 22, caractérisé en ce que l'état de chauffe des plaques de contact individuelles (2, 3) peut être commandé et/ou réglé d'une manière séparée.

24. Gril par contact selon l'une des revendications 1 à 23, caractérisé en ce que le circuit électrique assurant les changements d'état du gril est disposé dans un module distinct (6).

25. Gril par contact selon la revendication 24, caractérisé en ce que le module (6) destiné au circuit électrique est disposé en étant spatialement séparé des plaques de contact (2, 3).

26. Gril par contact selon l'une des revendications 1 à 25, caractérisé en ce que la température des plaques de contact peut être réglée par une régulation électronique.

27. Gril par contact selon l'une des revendications 1 à 26, caractérisé en ce qu'au moins une plaque de contact supérieure (3) est configurée comme une plaque rayonnante pour réaliser des gratinés ou conserver la chaleur.
